# EUROPEAN PATENT SPECIFICATION

(11) **EP 4 007 442 B1**
(45) Date of publication and mention of the grant of the patent: **02.10.2024**
(21) Application number: 19939487.5
(22) Date of filing: 31.07.2019
(51) Int. Cl.: H01Q 1/24, H01Q 1/52, H01Q 1/42

(54) **COMMUNICATION BASE STATION**
KOMMUNIKATIONSBASISSTATION
STATION DE BASE DE COMMUNICATION

(43) Date of publication of application: 01.06.2022
(73) Proprietor: Huawei Technologies Co., Ltd., Longgang District Shenzhen, Guangdong 518129 (CN)
(72) Inventor: CHEN, Shineng, Shenzhen, Guangdong 518129 (CN); LIU, Dezheng, Shenzhen, Guangdong 518129 (CN); PENG, Feng, Shenzhen, Guangdong 518129 (CN); JIANG, Jin, Shenzhen, Guangdong 518129 (CN)
(74) Representative: Gill Jennings & Every LLP
(86) International application number: PCT/CN2019/098722
(87) International publication number: WO 2021/016952

(56) References cited:
- EP-A2- 1 073 142
- CN-A- 101 807 930
- CN-U- 202 282 872
- US-A1- 2008 252 552
- US-A1- 2011 032 158
- US-A1- 2014 313 095
- US-B2- 8 422 232

## Description

### TECHNICAL FIELD

This application relates to the field of communication technologies, and in particular, to a communication base station.

### BACKGROUND

With development and promotion of 5G technologies (fifth generation mobile communication technologies), base station antenna devices, which are important support for wireless information transmission, are widely used. AAU (Active Antenna Unit) series base stations are new base stations that integrate radio frequency and antennas based on an AAS technology. An AAU (Active Antenna Unit) module mainly includes a passive antenna and an active radio frequency portion. With development of technologies and changes in working environments, the passive antenna and the active radio frequency portion both have changed in sizes and structures. Therefore, how to coordinate structure assemblies of the passive antenna and the active radio frequency portion when a communication base station is being designed becomes a key point of a product design.

US2011032158A1 relates to panel antenna having sealed radio enclosure. EP1073142A2 relates to housing for a radio apparatus for a roadside communication system. US2008252552A1 relates to antenna housing and antennas with such antenna housings. US2014313095A1 relates to antenna apparatus, base station and communications system.

### SUMMARY

A technical problem to be resolved in the present disclosure is to provide a communication base station to coordinate an assembly relationship between a passive antenna and an active radio frequency portion in a changing requirement on sizes.

The invention has been defined in the independent claim.

Further specific technical features have been defined in the dependent claims.

An implementation of this application provides a communication base station. The communication base station includes: a radome, a radiator, i.e. a heat sink, and an adapter board, where the adapter board includes a first board surface and a second board surface that are disposed oppositely, the radome is fastened to the first board surface, a first cavity configured to accommodate an antenna component of the communication base station is formed between the radome and the adapter board, the radiator includes a mounting surface and a side wall that are neighboring to each other, a second cavity configured to accommodate a radio frequency component of the communication base station is recessed on the mounting surface, the mounting surface is fixedly connected to the second board surface, the second cavity is communicated with the first cavity, a connector is mounted at a position on the side wall close to the mounting surface, and the connector is electrically connected to the radio frequency component. Specifically, a radio frequency device in the radio frequency component is mounted on a circuit board, the connector is also connected to the circuit board, and the connector is electrically connected to the radio frequency device through a circuit line. In the communication base station in this implementation, an adapter board is designed between the radome and the radiator, so that sizes of the radome and the radiator may be designed based on respective performance requirements. This avoids inconvenience in production and assembly processes. Specifically, in the production process, because an edge of the radiator is not blocked by any mechanical part (such as a water-proof edge), when a screw hole (where the screw hole is configured to mount the connector) at a position on the side wall of the radiator close to the mounting surface is processed, an operation of a machining tool is facilitated. In addition, in the assembly process, mounting of the connector on the radiator is also facilitated. In this way, assembly of the radiator and the connector is very convenient. In an implementation, the adapter board is provided with a through hole for communicating the first cavity with the second cavity, and a projection area of the second cavity on the adapter board is greater than or equal to a hole area of the through hole. The antenna component accommodated in the first cavity needs to be electrically connected to the radio frequency component accommodated in the second cavity. Therefore, the through hole needs to be provided on the adapter board to implement an electrical connection between the two components.

Specifically, the radio frequency device in the radio frequency component is mounted on the circuit board, the circuit board is provided with the connector, and the connector is electrically connected to the antenna component through a transmission line.

In an implementation, a shielding structure is disposed in the second cavity and is configured to wrap and shield the radio frequency component. The shielding structure is designed to block mutual electromagnetic interference between radio frequency components and between the radio frequency component and the antenna component, to improve working performance of the communication base station.

In an implementation, the shielding structure is a shielding case, the shielding case is buckled on an inner bottom surface of the radiator, and the radio frequency component is accommodated in a shielding space formed by the shielding case and the inner bottom surface. In this implementation, the radiator is used as a part of the shielding structure. The radiator is made of a material having a shielding function, and is combined with the shielding case to form the shielding space.

In an implementation, the shielding structure is a shielding board, the shielding board is attached to the second board surface, and the radio frequency component is accommodated in a shielding space formed by the shielding board and an inner surface of the radiator. An attached shielding board is designed on the second board surface to shield the through hole and form a shielding cavity. Such a design can be manufactured conveniently and facilitate assembly of the antenna and base station.

In an implementation, the shielding structure is a shielding board, the shielding board is connected to an inner side face of the second cavity, and the radio frequency component is accommodated in a shielding space formed by the shielding board and an inner surface of the radiator. A metal plate is used to form a shielding board to shield the radio frequency component. A structure is simple, processing is convenient, and manufacturing costs are low.

In an implementation, a water-proof rubber strip is disposed between the first board surface and the radome and a water-proof rubber strip is disposed between the second board surface and the radiator. The antenna base station in this implementation may be widely used in outdoor spaces. Therefore, the product needs to have waterproof performance to avoid impact of rain on device performance. Therefore, when the board surfaces are attached to each other, the water-proof rubber strip needs to be added to avoid damage caused by a water leakage at a connection position to electric elements in the first cavity and the second cavity.

According to the claimed disclosure, the adapter board is provided with a plurality of first screw holes and a plurality of second screw holes, which are configured to detachably connect the radome and the radiator to the adapter board. The radome and the radiator are detachably mounted on two sides of the adapter board by using screw threads. A mounting operation is simple, and manufacturing costs are also low.

The plurality of first screw holes are distributed on an edge of the adapter board, and the radome is mounted in cooperation with the plurality of first screw holes. The first screw holes are adapted to mount the radome in cooperation with the adapter board. A size of the radome is determined by a size of the antenna component. Therefore, when the radome is mounted in cooperation with the adapter board, the size of the adapter board can be determined only based on the size of the radome. The first screw holes are distributed on the edge of the adapter board, that is, the radome is buckled on the edge of the adapter board to make a product structure design as small as possible.

The plurality of second screw holes are distributed around the through hole, and the radiator is mounted in cooperation with the plurality of second screw holes. The radiator is connected to the adapter board through the plurality of second screw holes and by using screw threads. This may be understood as that a region surrounded by the second screw holes is a region on the second board surface on which the radiator is projected. To miniaturize a product structure, a projection of the radiator on the second board surface also needs to be greater than the through hole. Therefore, the region surrounded by the second screw holes needs to be greater than the through hole, in other words, the plurality of second screw holes are distributed around the through hole.

### BRIEF DESCRIPTION OF DRAWINGS

FIG. 1 is a schematic diagram of a structure of a communication base station according to a conventional technology;
FIG. 2 is a main view of a communication base station according to an implementation of this application;
FIG. 3 is a bottom view of a communication base station according to an implementation of this application;
FIG. 4 is a schematic diagram of a structure of an adapter board of a communication base station according to an implementation of this application;
FIG. 5 is a sectional view of a communication base station without a working component taken along an A-A line according to a first implementation of this application;
FIG. 6 is a sectional view of a communication base station according to a first implementation of this application;
FIG. 7 is a sectional view of a communication base station without a working component according to a second implementation of this application;
FIG. 8 is a sectional view of a communication base station according to a second implementation of this application;
FIG. 9 is a sectional view of a communication base station according to a third implementation of this application; and
FIG. 10 is a sectional view of a communication base station according to a fourth implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

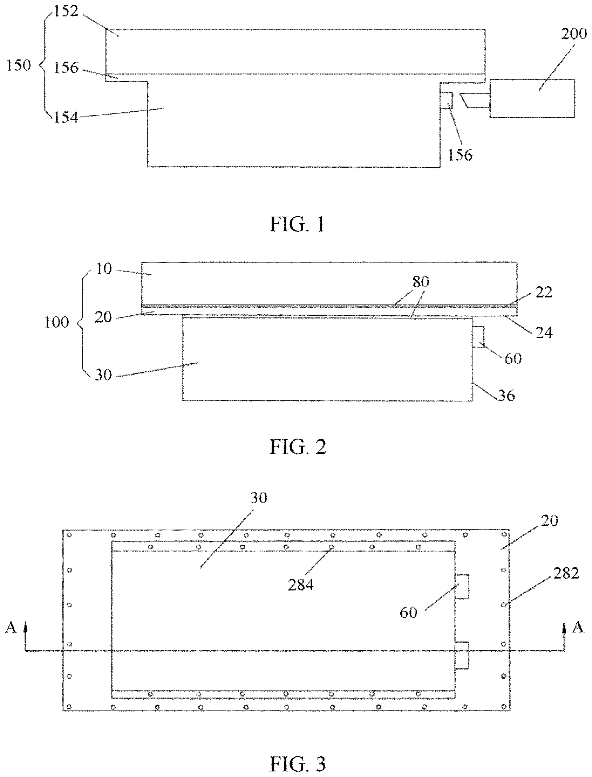

With development of communication technologies, especially maturation of 5G technologies, applications thereof also provide new requirements for communication base stations, and miniaturized base stations become a mainstream of future communication products. FIG. 1 shows a common communication base station 150. The communication base station 150 mainly includes a passive antenna portion 152 and an active radio frequency portion 154. The passive antenna portion 152 is configured to receive and send a communication signal. The active radio frequency portion 154 may include a power amplifier, a harmonic circuit, and the like; and is configured to process the communication signal. To enable the communication base station 150 to communicate with an external signal, a connector 156 is usually further disposed. The connector 156 is electrically connected to another communication device through a communication cable. As the 5G technologies become mature, an integration degree of the active radio frequency portion 154 becomes higher and a size becomes smaller. However, as another important part of the antenna base station 150, a size of the passive antenna portion 152 at a specific frequency band basically remains unchanged due to limitations of an antenna gain and a physical size requirement. This poses a challenge to the structural design of the communication base station 150. Because the size of the passive antenna portion 152 is relatively fixed and the size of the active radio frequency portion 154 becomes smaller as the technologies become mature, a T-shaped structure similar to that in FIG. 1 is formed. An integrated water-proof edge 156 is disposed at a connection position between the active radio frequency portion 154 and the passive antenna portion 152 and is configured to mount the passive antenna portion 152. The passive antenna portion 152 is like a hat covering the active radio frequency portion 154. Such a structure causes a problem that in a production process, when a screw hole configured to fasten the connector 156 to the active radio frequency portion 154 is processed, an operation of a machining tool is not convenient due to existence of the water-proof edge 156, processing efficiency is low, and a success rate is low. In addition, in a process of mounting the connector 156 to the active radio frequency portion 154, an operation is not convenient, and assembly efficiency is low.

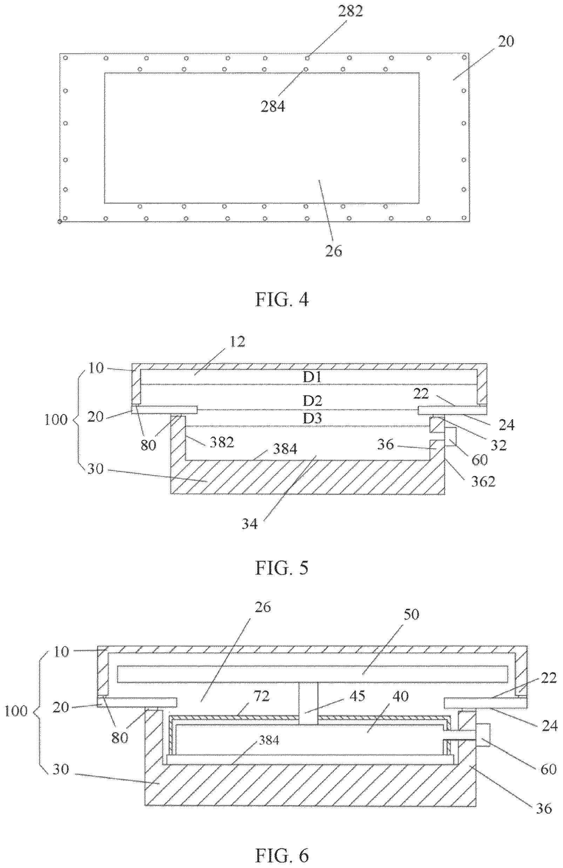

In view of this, this application provides a communication base station 100. As shown in FIG. 2 and FIG. 3, the communication base station 100 mainly includes a radome 10, an adapter board 20, and a radiator, i.e. a heat sink, 30 from top to bottom. The adapter board 20 and the radiator 30 are independent of each other. The adapter board 20 includes a first board surface 22 and a second board surface 24. As shown in FIG. 5 and FIG. 6, similar to a cover without a bottom, the radome 10 is buckled to the first board surface 22 to form a first cavity 12 configured to accommodate an antenna component 50 of the communication base station 100. A surface of the radiator 30 facing the second board surface 24 of the adapter board 20 is a mounting surface 32. The mounting surface 32 is attached to the second board surface 24. A part of the mounting surface 32 is recessed along a direction away from the adapter board 20 to form a second cavity 34 configured to accommodate a radio frequency component 40 of the communication base station 100.

The radiator 30 includes a mounting surface 32 and an outer side wall 362 that are neighboring to each other. The mounting surface 32 is formed on the side wall 36 and is a surface that is of the first side wall 36 and that faces the second board surface 24. A connector 60 is mounted on the side wall 36 of the radiator 30. The connector 60 is located at a position on the outer side wall 362 close to the mounting surface 32. The connector 60 is electrically connected to the radio frequency component 40 and is configured to communicate the radio frequency component 40 with an external circuit (not shown in the figure). Specifically, a radio frequency device in the radio frequency component is mounted on a circuit board, the connector is also connected to the circuit board, and the connector is electrically connected to the radio frequency device through a circuit line. In the communication base station 100 in this implementation, the adapter board 20 is disposed between the radome 10 and the radiator 30. In a production process, a screw hole configured to fasten the connector 60 is processed on the radiator 30 first. In an assembly process, an operator first mounts the connector 60 on the radiator 30, and then fastens the adapter board 20 to the radiator 30. Specifically, the radiator 30 is mounted on the second board surface 24 of the adapter board 20 first; and then, the radome 10 is mounted on the first board surface 22 of the adapter board 20. According to the architecture in this application, in the production process, because an edge of the radiator 30 is not blocked by any mechanical part (such as a water-proof edge), when a screw hole (where the screw hole is configured to mount the connector) at a position on the side wall of the radiator 30 close to the mounting surface is processed, an operation of a machining tool is facilitated. In addition, in the assembly process, mounting of the connector 60 on the radiator 30 is also facilitated. In this way, assembly of the radiator 30 and the connector 60 is very convenient.

In an implementation, as shown in FIG. 4 and FIG. 6, a part of the adapter board 20 is hollowed out to form a through hole 26 for communicating the first cavity 12 with the second cavity 34. For the communication base station 100, the antenna component 50 and the radio frequency component 40 need to exchange signals and are communicated with each other through a corresponding circuit. Therefore, the through hole 26 needs to be provided on the adapter board 20. The two components are electrically connected through a connection line 45.

According to the claimed disclosure, as shown in FIG. 4, the adapter board 20 is provided with a plurality of first screw holes 282 and a plurality of second screw holes 284, which are configured to detachably connect the radome 10 and the radiator 30 to the adapter board 20. The radome 10 and the radiator 30 are detachably mounted on two sides of the adapter board 20 by using screw threads. A mounting operation is simple, and manufacturing costs are also low.

The plurality of first screw holes 282 are distributed on an outer edge of the adapter board 20, the radome 10 is mounted in cooperation with the plurality of first screw holes 282, the plurality of second screw holes 284 are distributed around the through hole 26, and the radiator 30 is mounted in cooperation with the plurality of second screw holes 284. The first screw holes 282 are configured to mount the radome 10 in cooperation with the adapter board 20. A size of the radome 10 is determined by a size of the antenna component 50. Therefore, when the radome 10 is mounted in cooperation with the adapter board 20, the size of the adapter board 20 can be determined only based on the size of the radome 10. The first screw holes 282 are distributed on the edge of the adapter board 20, that is, the radome 10 is buckled on the edge of the adapter board 20 to make a product structure design as small as possible. Similarly, the radiator 30 is connected to the adapter board 20 through the plurality of second screw holes 284 and by using screw threads. This may be understood as that a region surrounded by the second screw holes 284 is a region on the second board surface 24 on which the radiator 30 is projected. To miniaturize a product structure, a projection of the radiator 30 on the second board surface 24 also needs to be greater than the through hole 26. Therefore, the region surrounded by the second screw holes 284 needs to be greater than the through hole 26, in other words, the plurality of second screw holes 284 are distributed around the through hole 26.

In an implementation, as shown in FIG. 5 and FIG. 6, widths of the radome 10, the adapter board 20, and the radiator 30 are equivalent. Therefore, to compare sizes of projection areas of corresponding structures on the adapter board 20, lengths D (shown as D 1, D2, and D3 in the figure) are used as substitutes. Sizes of D in the sectional view are compared to show the sizes of the projection areas corresponding to the structures. In this implementation, a projection of the first cavity 12 on the adapter board 20 is greater than a projection of the second cavity 34 on the adapter board 20. As specified above, the length D1 of the first cavity 12 is greater than the length D3 of the second cavity 34 in the figure. As can be learned from the foregoing descriptions, the adapter board 20 has a function of separating the radome 10 and the radiator 30, in other words, the radome 10 is fastened to the first board surface 22 of the adapter board 20, and the radiator 30 is fastened to the second board surface 24 of the adapter board 20. In the design of the communication base station 100, a size of the antenna component 50 is determined by an inherent frequency band and a gain effect of communication and is difficult to reduce. This also determines a size of the first cavity 12. However, with development of communication technologies, a module integration degree of the radio frequency component 40 becomes higher, and a size of the radio frequency component 40 also becomes smaller, that is, the second cavity 34 configured to accommodate the radio frequency component 40 may be miniaturized. Therefore, sizes of projections of the first cavity 12 and the second cavity 34 that are separately located on two sides of the adapter board 20 need to be different on the adapter board 20, to ensure a miniaturization design of the entire communication base station 100.

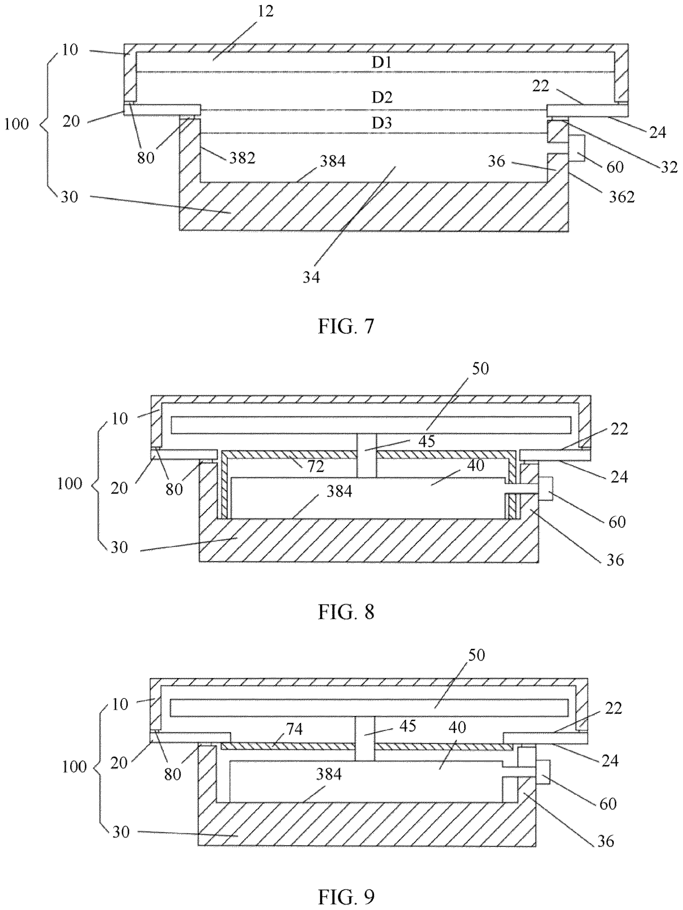

In an implementation, as shown in FIG. 7 and FIG. 8, a projection area of the second cavity 34 on the adapter board 20 is equal to a hole area of the through hole 26, that is, the length D3 of the second cavity 34 is equal to the length D2 of the through hole 26 in the figure. Because the mounting surface 32 of the radiator 30 is in contact with the second board surface 24, to fasten the radiator 30 to the second board surface 24, a size of the second cavity 34 cannot be less than a size of the through hole 26. Otherwise, the mounting surface 32 cannot be attached to the second board surface 24 normally. It should be noted that to miniaturize the entire product, when the radio frequency component 40 becomes small, the size of the second cavity 34 is reduced accordingly. If the size of the radio frequency component 40 is less than the size of the through hole 26, to ensure normal attachment between the mounting surface 32 and the second board surface 24, a projection area of the second cavity 34 can only be equal to the hole area of the through hole 26 and cannot be equal to the radio frequency component 40 with a smaller size.

In an implementation, as shown in FIG. 5 and FIG. 6, a projection area of the second cavity 34 on the adapter board 20 is greater than a hole area of the through hole 26, that is, the length D3 of the second cavity 34 is greater than the length D2 of the through hole 26 in the figure. Because the mounting surface 32 of the radiator 30 is in contact with the second board surface 24, to fasten the radiator 30 to the second board surface 24, a size of the second cavity 34 cannot be less than a size of the through hole 26. Otherwise, the mounting surface 32 cannot be attached to the second board surface 24 normally. Herein, a purpose of setting the projection area of the second cavity 34 greater than the hole area of the through hole 26 is to make the size of the second cavity 34 irrelevant to the through hole 26. A more important point is a size of the radio frequency component 40. When the size of the radio frequency component 40 is greater than the size of the through hole 26, a projection area of the second cavity 34 for accommodating the radio frequency component 40 on the second board surface 24 is definitely greater than the hole area of the through hole 26. In an implementation, as shown in FIG. 6, FIG. 8, FIG. 9, and FIG. 10, a shielding structure is disposed in the second cavity 34 and is configured to wrap and shield the radio frequency component 40. The shielding structure is designed to block electromagnetic interference from the radio frequency component 40 to the antenna component 50, to improve working performance of the antenna component 50.

In a specific implementation, as shown in FIG. 6, the shielding structure disposed in the second cavity 34 is a shielding case 72. The shielding case 72 is configured to shield the radio frequency device on the circuit board of the radio frequency component 40.

In an implementation, the shielding case 72 is buckled to an inner bottom surface 384 of the radiator 30 to form a shielding space (as shown in FIG. 8). In this case, a size of the shielding space is determined by the shielding case 72, and a size of the shielding case 72 may be adjusted based on the radio frequency component 40.

In a situation, as shown in FIG. 6, the radio frequency component 40 is large. As a result, the projection of the second cavity 34 on the adapter board 20 is greater than the through hole 26. Therefore, in this case, a height of the shielding case 72 cannot be higher than a height of the second cavity 34. In another situation, as shown in FIG. 8, the size of the radio frequency component 40 is small. As a result, the projection area of the second cavity 34 on the adapter board 20 is equal to the hole area of the through hole 26. Therefore, in this case, a height of the shielding case 72 can be higher than a height of the second cavity 34. In addition, when the shielding case 72 is used as the shielding structure, shielding effects in different directions of the radio frequency component 40 are the same.

In a specific implementation, as shown in FIG. 9, the shielding structure is a shielding board 74. The shielding board 74 is attached to the second board surface 24, and the radio frequency component 40 is accommodated in a shielding space formed by the shielding board 74 and an inner surface 38 of the radiator 30. An attached shielding board 74 is designed on the second board surface 24 to shield the through hole 26 and form a shielding cavity. Such a design can be manufactured conveniently and facilitate assembly of the antenna base station 100.

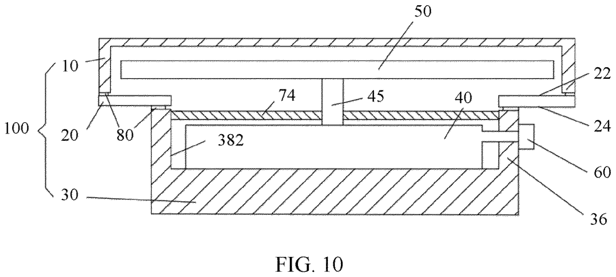

In a specific implementation, as shown in FIG. 10, the shielding structure is a shielding board 74, the shielding board 74 is connected to an inner side face 382 of the second cavity 34, and the radio frequency component 40 is accommodated in a shielding space formed by the shielding board 74 and an inner surface 38 of the radiator 30. A metal plate is used to form a shielding board 74 to shield the radio frequency component 40. A structure is simple, processing is convenient, and manufacturing costs are low.

In an implementation, as shown in FIG. 2, a water-proof rubber strip 80 is disposed between the first board surface 22 and the radome 10 and a water-proof rubber strip 80 is disposed between the second board surface 24 and the radiator 30. The antenna base station 100 in this implementation may be widely used in outdoor spaces. Therefore, the product needs to have waterproof performance to avoid impact of rain on device performance. Therefore, when the board surfaces are attached to each other, the water-proof rubber strip 80 needs to be added to avoid damage caused by a water leakage at a connection position to electric elements in the first cavity 12 and the second cavity 34.

The scope of protection is defined by the appended claims.

## Claims

1. A communication base station (100), comprising a radome (10), a heat sink (30), and an adapter board (20),
wherein the adapter board comprises a first board surface (22) and a second board surface (24) that are disposed oppositely, the radome is fastened to the first board surface, a first cavity (12) configured to accommodate an antenna component (50) of the communication base station is formed between the radome and the adapter board, the heat sink comprises a mounting surface (32) and a side wall (36, 362) that are neighboring to each other, a second cavity (34) configured to accommodate a radio frequency component (40) of the communication base station is recessed on the mounting surface, the mounting surface is detachably connected to the second board surface, the second cavity is communicated with the first cavity by a through hole (26) provided in the adapter board (20), a connector (60) is mounted at a position on the side wall close to the mounting surface, and the connector is electrically connectable to the radio frequency component;
wherein the adapter board is provided with a plurality of first screw holes (282) and a plurality of second screw holes (284), which are configured to detachably connect the radome and the heat sink to the adapter board;
wherein the plurality of first screw holes are distributed on an outer edge of the adapter board, and the radome is mounted in cooperation with the plurality of first screw holes; and
wherein the plurality of second screw holes are distributed around the through hole, and the heat sink is mounted in cooperation with the plurality of second screw holes.

2. The communication base station according to claim 1, wherein a projection area of the second cavity on the adapter board is greater than or equal to a hole area of the through hole.

3. The communication base station according to claim 1, wherein a shielding structure (72, 74) is disposed in the second cavity and is configured to wrap and shield the radio frequency component.

4. The communication base station according to claim 3, wherein the shielding structure is a shielding case (72), the shielding case is buckled on an inner bottom surface of the heat sink, and the shielding case is configured to accommodate the radio frequency component in a shielding space formed by the shielding case and the inner bottom surface.

5. The communication base station according to claim 3, wherein the shielding structure is a shielding board (74), the shielding board is attached to the second board surface, and the shielding board is configured to accommodate the radio frequency component in a shielding space formed by the shielding board and an inner surface of the heat sink.

6. The communication base station according to claim 3, wherein the shielding structure is a shielding board (74), the shielding board is connected to the side wall of the heat sink, and the shielding board is configured to accommodate the radio frequency component in a shielding space formed by the shielding board and an inner surface of the heat sink.

7. The communication base station according to claim 1, wherein a water-proof rubber strip (80) is disposed between the first board surface and the radome and a water-proof rubber strip (80) is disposed between the second board surface and the heat sink.

## Patentansprüche

1. Kommunikationsbasisstation (100), die ein Radom (10), einen Kühlkörper (30) und eine Anschlussplatine (20) umfasst,
wobei die Anschlussplatine eine erste Platinenoberfläche (22) und eine zweite Platinenoberfläche (24), die gegenüberliegend angeordnet sind, umfasst, das Radom an der ersten Platinenoberfläche festgemacht ist, ein erster Hohlraum (12), der konfiguriert ist, um eine Antennenkomponente (50) der Kommunikationsbasisstation aufzunehmen, zwischen dem Radom und der Anschlussplatine ausgebildet ist,
der Kühlkörper eine Montageoberfläche (32) und eine Seitenwand (36, 362), die einander benachbart sind, umfasst, ein zweiter Hohlraum (34), der konfiguriert, um eine Hochfrequenzkomponente (40) der Kommunikationsbasisstation aufzunehmen, auf der Montageoberfläche versenkt ist, die Montageoberfläche mit der zweiten Platinenoberfläche lösbar verbunden ist, der zweite Hohlraum mit dem ersten Hohlraum durch ein Durchgangsloch (26), das in der Anschlussplatine (20) bereitgestellt ist, in Kommunikation steht,
ein Verbinder (60) an einer Position auf der Seitenwand nahe der Montageoberfläche montiert ist, und der Verbinder mit der Hochfrequenzkomponente elektrisch verbindbar ist; wobei die Anschlussplatine mit einer Vielzahl von ersten Schraubenlöchern (282) und einer Vielzahl von zweiten Schraubenlöchern (284) versehen ist, die konfiguriert sind, um das Radom und den Kühlkörper mit der Anschlussplatine lösbar zu verbinden; wobei die Vielzahl von ersten Schraubenlöcher auf einer Außenkante der Anschlussplatine verteilt ist und das Radom im Zusammenwirken mit der Vielzahl von ersten Schraubenlöcher montiert ist; und
wobei die Vielzahl von zweiten Schraubenlöchern um das Durchgangsloch herum verteilt ist und der Kühlkörper im Zusammenwirken mit der Vielzahl von zweiten Schraubenlöchern montiert ist.

2. Kommunikationsbasisstation nach Anspruch 1, wobei eine Projektionsfläche des zweiten Hohlraums auf der Anschlussplatine größer als oder gleich einer Lochfläche des Durchgangslochs ist.

3. Kommunikationsbasisstation nach Anspruch 1, wobei eine Abschirmstruktur (72, 74) in dem zweiten Hohlraum angeordnet ist und konfiguriert ist, um die Hochfrequenzkomponente zu umhüllen und abzuschirmen.

4. Kommunikationsbasisstation nach Anspruch 3, wobei die Abschirmstruktur ein Abschirmgehäuse (72) ist, das Abschirmgehäuse auf einer inneren Bodenoberfläche des Kühlkörpers befestigt ist und das Abschirmgehäuse konfiguriert ist, um die Hochfrequenzkomponente in einem Abschirmraum, der durch das Abschirmgehäuse und die innere Bodenoberfläche ausgebildet wird, aufzunehmen.

5. Kommunikationsbasisstation nach Anspruch 3, wobei die Abschirmstruktur eine Abschirmplatine (74) ist, die Abschirmplatine an der zweiten Platinenoberfläche angebracht ist und die Abschirmplatine konfiguriert ist, um die Hochfrequenzkomponente in einem Abschirmraum, der durch die Abschirmplatine und eine innere Oberfläche des Kühlkörpers ausgebildet wird, aufzunehmen.

6. Kommunikationsbasisstation nach Anspruch 3, wobei die Abschirmstruktur eine Abschirmplatine (74) ist, die Abschirmplatine mit der Seitenwand des Kühlkörpers verbunden ist und die Abschirmplatine konfiguriert ist, um die Hochfrequenzkomponente in einem Abschirmraum, der durch die Abschirmplatine und eine innere Oberfläche des Kühlkörpers ausgebildet wird, aufzunehmen.

7. Kommunikationsbasisstation nach Anspruch 1, wobei ein wasserdichter Gummistreifen (80) zwischen der ersten Platinenoberfläche und dem Radom angeordnet ist und ein wasserdichter Gummistreifen (80) zwischen der zweiten Platinenoberfläche und dem Kühlkörper angeordnet ist.

## Revendications

1. Station de base de communication (100), comprenant un radôme (10), un dissipateur thermique (30) et une carte d'adaptation (20),
dans laquelle la carte d'adaptation comprend une première surface de carte (22) et une seconde surface de carte (24) disposées de manière opposée, le radôme est fixé à la première surface de carte, une première cavité (12) conçue pour accueillir un composant d'antenne (50) de la station de base de communication est formée entre le radôme et la carte d'adaptation, le dissipateur de chaleur
comprend une surface de montage (32) et une paroi latérale (36, 362) voisines, une seconde cavité (34)
conçue pour accueillir un composant radiofréquence (40) de la station de base de communication est encastrée sur la surface de montage, la surface de montage est reliée de manière amovible à la seconde surface de la carte, la seconde cavité est communiquée avec la première cavité par un trou de passage (26) prévu dans la carte d'adaptateur (20),
un connecteur (60) est monté à un endroit de la paroi latérale proche de la surface de montage, et le connecteur peut être connecté électriquement au composant de radiofréquence ;
dans laquelle la carte d'adaptation est pourvue d'une pluralité de premiers trous de vis (282) et d'une pluralité de seconds trous de vis (284), qui sont conçus pour relier de manière amovible le radôme et le dissipateur thermique à la carte d'adaptation ; dans laquelle la pluralité de premiers trous de vis est répartie sur un bord extérieur de la carte d'adaptation, et le radôme est monté en coopération avec la pluralité de premiers trous de vis ; et
dans lequel la pluralité de seconds trous de vis est répartie autour du trou traversant, et le dissipateur thermique est monté en coopération avec la pluralité de seconds trous de vis.

2. Station de base de communication selon la revendication 1, dans laquelle une zone de projection de la seconde cavité sur la
carte d'adaptation est supérieure ou égale à la surface du trou traversant.

3. Station de base de communication selon la revendication 1, dans laquelle une structure de blindage (72, 74) est disposée dans la seconde cavité et est conçue pour envelopper et protéger le composant de fréquence radio.

4. Station de base de communication selon la revendication 3, dans laquelle la structure de blindage est un boîtier de blindage (72), le boîtier de blindage est bouclé sur une surface inférieure intérieure du dissipateur thermique, et le boîtier de blindage est conçu pour accueillir le composant de radiofréquence dans un espace de blindage formé par le boîtier de blindage et la surface inférieure intérieure

5. Station de base de communication selon la revendication 3, dans laquelle la structure de blindage est une carte de blindage (74), la carte de blindage est fixée à la seconde surface de la carte, et la carte de blindage est conçue pour accueillir le composant de radiofréquence dans un espace de blindage formé par la carte de blindage et une surface intérieure du dissipateur thermique.

6. Station de base de communication selon la revendication 3, dans laquelle la structure de blindage est une carte de blindage (74), la carte de blindage est connectée à la paroi latérale du dissipateur thermique, et la carte de blindage est conçue pour accueillir le composant de radiofréquence dans un espace de blindage formé par la carte de blindage et une surface intérieure du dissipateur thermique.

7. Station de base de communication selon la revendication 1, dans laquelle une bande de caoutchouc étanche (80) est disposée entre la première surface de la carte et le radôme et une bande de caoutchouc étanche (80) est disposée entre la seconde surface de la carte et le dissipateur thermique.
